# EUROPEAN PATENT SPECIFICATION

(11) **EP 1 141 840 B1**
(45) Date of publication and mention of the grant of the patent: **02.03.2011**
(21) Application number: 99962616.1
(22) Date of filing: 17.11.1999
(51) Int. Cl.: G06F 12/08, G06F 12/12

(54) **ARRANGEMENT AND METHOD RELATED TO DISTRIBUTED CACHING**
VORRICHTUNG UND VERFAHREN MIT BEZUG AUF VERTEILTE CACHESPEICHER
SYSTEME ET PROCEDE CONCERNANT LA MISE EN ANTEMEMOIRE DISTRIBUEE

(30) Priority: 20.11.1998 SE 9803974
(43) Date of publication of application: 10.10.2001
(73) Proprietor: Telefonaktiebolaget LM Ericsson (publ), 164 83 Stockholm (SE)
(72) Inventor: LENANDER, Jan, S-436 39 Askim (SE); THOREN, Patrick, S-393 52 Kalmar (SE); KRIENS, Peter, S-439 33 Onsala (SE)
(74) Representative: Bergentall, Annika Maria
(86) International application number: PCT/SE1999/002102
(87) International publication number: WO 2000/031643

(56) References cited:
- GB-A- 2 317 723
- US-A- 5 134 696
- US-A- 5 305 389
- US-A- 5 787 470

## Description

### FIELD OF THE INVENTION

The present invention relates to a system and a method for providing distributed caching of reply data objects within a packet data network comprising network elements, a client terminal and at least two intermediary Web caches.

### STATE OF THE ART

Distributed caching is a growing concern for World Wide Web technology solutions as increased usage raises the demand for higher performance. State of the art caching schemes are basically static in their nature which makes them somewhat in opposition to basic forces of Internet evolution.

For example, in the caching process, a cache located within the Internet Access Service Provider network functions as an intermediary in transactions involving retrieval of Web objects from servers by a client terminal. Such an object may be one or more pages of textual information, a picture, a sound clip, a video clip, a JAVA applet or other software, or anything that is capable of being transmitted digitally over the Internet to a client terminal. When a request for an object is received from a client, unless the object is found on the cache to which the requesting client is connected, a query process is started which involves sending out a plurality of requests to neighboring caches asking them whether they have a copy of the desired object stored in their memory. The flooding of requests to all neighboring caches in response to each request for an object represents a load on the network bandwidth, as well as a drain of cache computing resources.

There is a need for offering products with high performance that can evolve independently as well as being part of a big rapidly evolving network. In particular, there is a need for a distributed caching process that reduces network bandwidth load and promotes performance.

A state of the art distributed caching solution includes catching of user session data (form data most recently fetched by same user) which gives very high performance for some very common use cases. It is focused on data related to caching operator interaction and uses the primary memory of the client as storage. This does not utilize the operations by other operators nor operations that have been performed at a previous login.

There also exists a large number of caching schemes with algorithms for caching objects according to latest cached object, most frequently cached object etc. Several ways of distributing these caching objects have also been utilized as well as division and coordination schemes. These solutions have been very hard to adapt to a new and changing network configuration.

For example, US Patent 5,787,470 addresses the problem of making Web caching more efficient. However, this solution involves exchange of information about contents of neighboring caches between these caches.

US-A-5,305 389 describes a system with a separate caching wherein access patterns are used to improve the contents of the cache. It is further found that context can be a way to structure access patterns, but the main focus of this system deals with the issue of being able to predict what the caching needs will be based on historical data.

GB-A-2 317 723 shows a caching system for information retrieval from, a server network wherein the information is stored before retrieval. Proxy cache servers are provided in two or more hierarchical layers. Each such server shows a dynamic and a static address list, of web page addresses (URLs) for which information is to be prefetched and cached in anticipation of retrieval by a user. The dynamic address list is modified depending on retrieval frequencies for pieces of information and the static address list is always prefetched.

Caches are not capable of working independently. US 5 134 656. describes a virtual look aside facility for maintaining named data objects in class-related data spaces in virtual cache retrievable by user programs. Less useful objects are removed from cache when cache space is fully utilized. Cache working independency is not provided and the solution suffers from drawbacks already discussed above.

### SUMMARY OF THE INVENTION

What is needed is therefore a system for providing distributed caching of reply data objects within a packet data network which offers high performance and which is flexible in an evolving environment. Furthermore, an arrangement is needed which avoids (reduces) synchronizing and exchange of data between caches.

Therefore a system is suggested which has the characterizing features of claim 1. The object context defining data may also contain information data. Furthermore, the associations between context in requests and replies are in an advantageous embodiment used for discriminating between relevant and no longer relevant reply data. This will align the caching scheme with the URL format and allow for a server based caching which may be optimized for the most frequent use cases of several operators.

Preferably, caching functionality is separated with reference to requesting and replying. Particularly, it is advantageous if the definition of the associations may be changed. Due to this, the associations between the requests and the reply data may both be very flexible and very specific as to the exact nature of the associations.

The need for refreshing a cache is preferably determined by means of caching algorithms using information as to operation type. These types may include CREATE, DELETE and LIST, and the operation type information may be packaged for easy access.

A gradual pre-fetch of cache data may preferably be introduced and said pre-fetching of cache data may be based on read operations for data within the same context. Advantageously, this pre-fetching of data is performed at start-up. A part or parts of a cache is/are preferably also updated by an operator by manually choosing a context to up-date. In this way, a part or parts of a cache may be refreshed.

A method of providing distributed caching of reply data objects within a packet data network, as initially referred to, is also provided comprising the characterizing features of claim 13.
- Fig. 1: is a block diagram of a prior art network showing two caches connected in parallel within an IASP, interconnecting a client terminal and network elements within the Internet,
- Fig. 2: is a corresponding block diagram showing a network with two caches connected in series within an IASP.
- Fig. 3: illustrates the basic principle for the context based caching scheme according to the invention in a block diagram,
- Fig. 4: illustrates caching functionality of the caching scheme according to Fig. 3,
- Fig. 5: is a block diagram showing an implementation of the caching scheme according to the invention,
- Fig. 6: shows a three-layer management architecture relating to a further embodiment,
- Fig. 7: relates to the embodiment of Fig. 6 and is used to illustrate the problem of knowing when to refresh the cache due to distributed operations, and
- Fig. 8: illustrates an example on how to structure a refresh trigger mechanism.

### DETAILED DESCRIPTION OF THE INVENTION

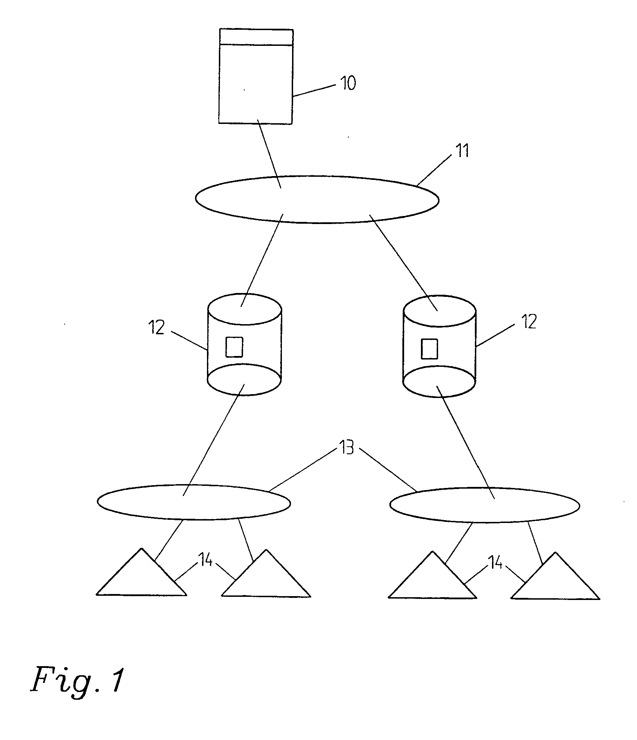

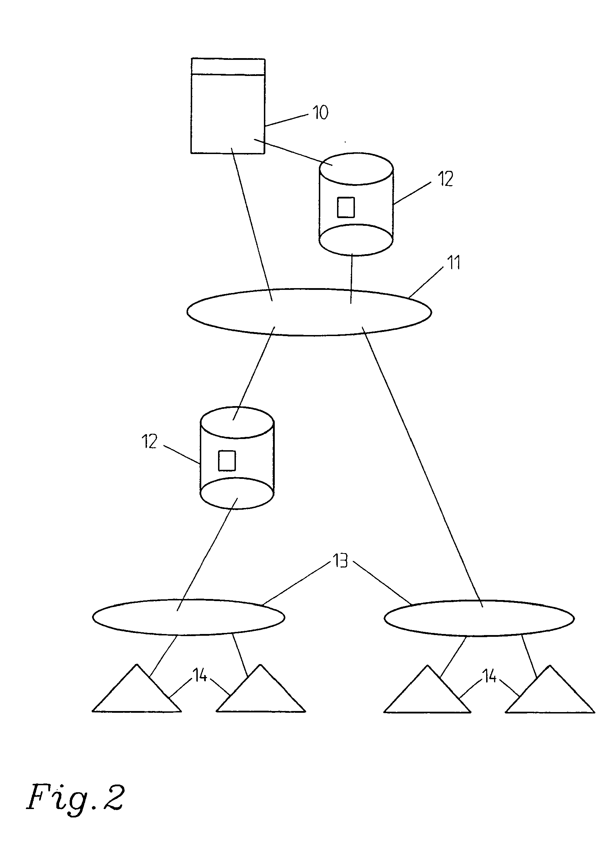

Fig. 1 shows a prior art network system where a number of clients 10, of which one is shown in Fig. 1, communicate via an IP network 11 with parallel service management cache nodes 12 which in turn communicates via second networks 13, for example X.25 networks, with a number of network elements 14. Fig. 2 shows a serial use of the caches 12. The network elements 14 may for example comprise telephone exchanges such as AXE's or similar but also PBX's. In a more generalized form the network elements are managed systems managed by the managing system.

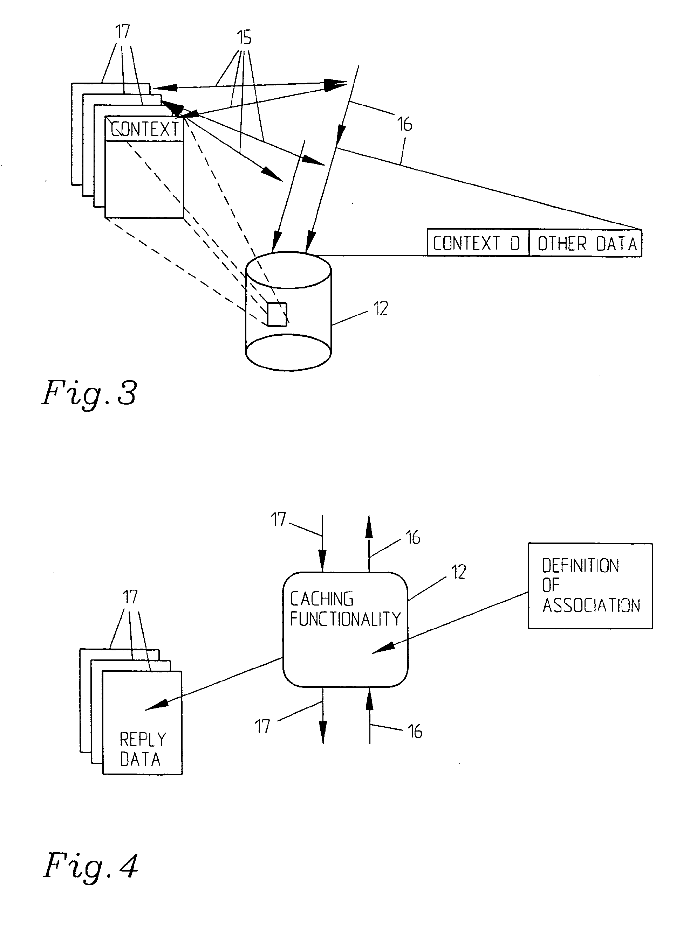

The basic principle for the caching scheme according to the invention is illustrated in Fig. 3 and involves defining associations 15 between requests 16 and reply objects 17, based on context.

The functionality for the cache is preferably separated and easily adapted. Fig. 4 illustrates a completely separated caching module receiving and sending replies 17 and requests 16 and storing reply data objects 17. The definition of the association is easily changed through a separate definition of the association.

An implementation where the associations between replies and requests are defined using regular expressions is preferred in order to have the highest flexibility possible.

A very simple example of implementation is a scheme where the MML commands are used towards NE and obtain both context and operation type from the five letter starting word, e.g. for command "BGBSL", "BGBS" is used for defining context and "L" for defining operation type. Based on this, information algorithms are made as to find out when to pre-fetch data and when to judge cache to be invalid.

Another scheme can have a context symbolic word as NUMBERING or EXTENSION somewhere in the data sent and received, or to have numbering schemes that provides the association between the data sent and data received.

The cache should send appropriate printout commands at start-up. It may be appropriate to delay the initiation of the cache so that it is performed at a time when the traffic is low. There should also exist a possibility for the system administrator to schedule a forced refresh of the cache.

For configuration management there exist a use where telephone numbers and corresponding information are stored in a table. This information is frequently updated and an important functionality is to give a high level operator support for easy operation and overview. This function has a central role in the service installation procedures since it gives an overview of installed objects. This functionality is preferably executed on the client where the operator is, and performance can be optimized through a client based caching regarding the context of operations that has been previously performed during the same user session. A server based cache is an improvement because it takes advantage of the operations of other operators. There also exists a very straightforward way of analyzing and finding out that the process is performed within the context of this numbering table as the commands sent are easy to analyze and use as a basis for caching.

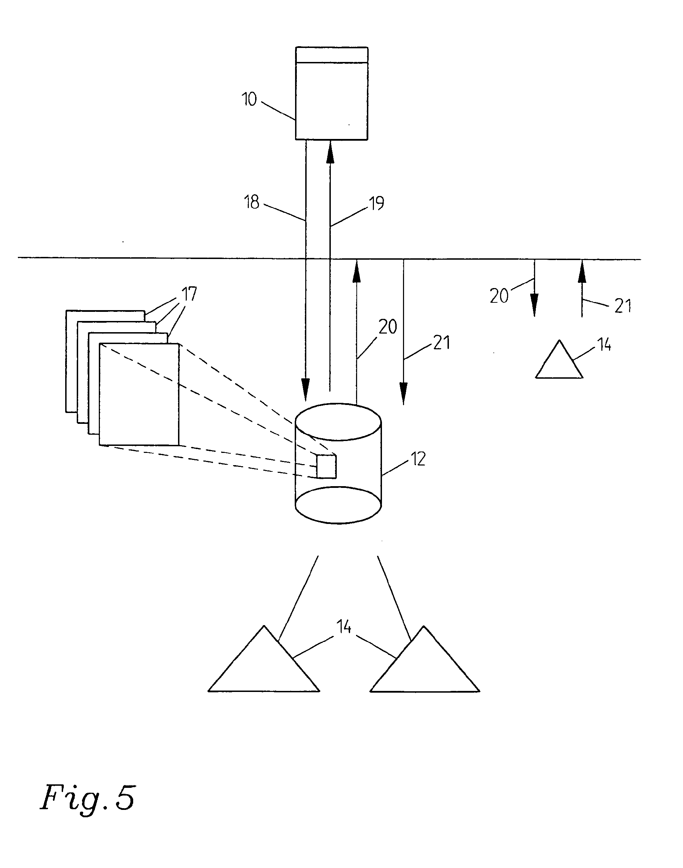

The very simple use case is described here below with reference to Fig. 5, where the caching is only distributed as to client and server, but the same use case is also applicable when caching is distributed onto several servers and the context is described as network element area plus case context. The simple variant where all reply data for a context is stored in a single file is also chosen although variants with other storage forms and other schemes for division of data is also possible.

### A cached data context is affected by an operator operation

In this use case the appropriate file is in the system cache. Flow of events:
- a: The user makes an operation as to change a data item.
- b: A request for a change is sent to the Netscape Enterprise server, see arrow 18.
- c: The server checks if there is a file 17 in the cache that is related to the same context and deletes it if it exists.

### Appropriate file is stored in cache

In this use case the appropriate file is in the system cache.
Flow of events:
- a: The user makes an operation as to view the numbering data.
- b: A request for a printout is sent to the Netscape Enterprise server, see arrow 18. The server checks if there is a file 17 in the cache for that Business Group.
- c: The appropriate file is sent to the client that parses it and displays the data, see arrow 19.

### Appropriate file is not stored in cache

The appropriate file is not in the system cache.
Flow of events:
- a: The user makes an operation as to view the numbering data.
- b: A request for a printout is sent to the Netscape Enterprise server, see arrow 18. The server checks if there is a file in the cache for that Business Group.
- c: The right MML commands are sent to the NE, see arrows 20.
- d: The NE sends the right printouts back to the server.
- e: The server sends the printouts to the client that parses them and displays them for the operator, see arrows 21.

An URL allows applications to retrieve objects through many different channels from completely different sources by simply specifying a string. The URL mechanism is very flexible and it contains a protocol, e.g. HTTP although others also can be used, a host address with a port and a resource identifier on that host.

The identifier may be a simple name, a path name on disk or a query.

The information for building the Man Machine language strings in the URL is preferably divided into one primary string and a longer information string. The primary string is preferably five characters long and constructed according to specific criteria whereby it also can be used as a basis for checking on allowed operations in a distributed manner. Particularly the primary string may be constructed according to specific criteria making it useable as an addressing means as well.

All types of network elements may be used and it is also possible to use the same network but different protocols for communication with a particular type of network element. The telephone exchanges do furthermore of course not have to be AXEs and PBXs (such as e.g. MD110 of Ericsson) but it may be any kind and any combination of telephone exchanges. It should however be clear that the invention is not limited to telephone exchange (here relating to public as well as private exchanges) but it applies just as well to other kinds of managed systems, e.g. Voice over IP gateway or network elements managed by a managing system receiving applications executed in a client.

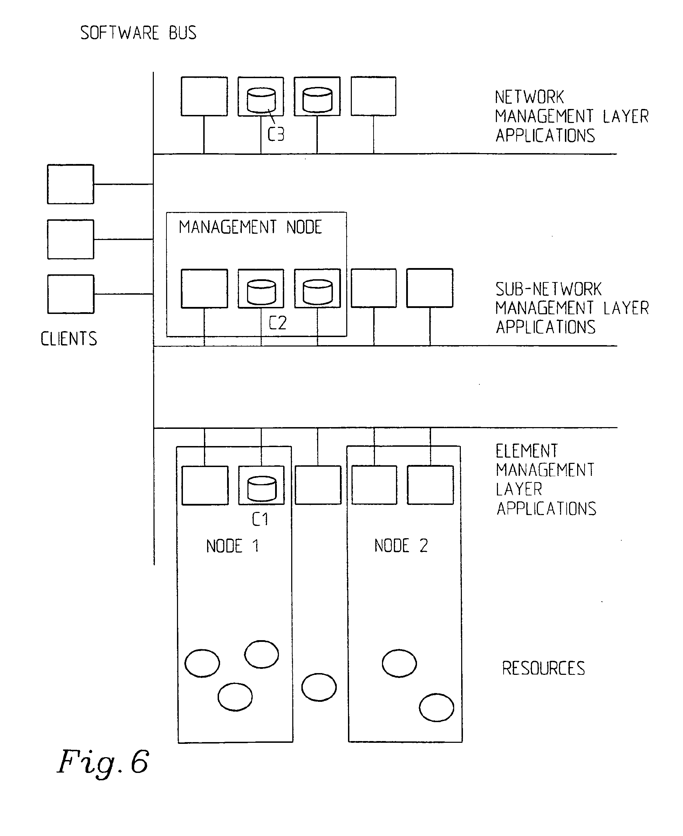

Below a further implementation of the inventive concept will be described with reference to Figs. 6-8.

A three layered architecture of management applications is found to be a good solution for addressing different user/operator needs. The management applications are connected with a software bus e.g. CORBA (Common Object Request Broker Architecture) over TCP/IP. The data are presented in more and more sophisticated ways for higher and higher layers and different types of data course also mean a performance problem. A need for caching will arise for several applications. The caching needs are described below with reference to figure 6.

Fig. 6 shows a three layer management architecture wherein CX is taken to mean different caching aggregates from sublevel sources. Examples thereon are C1 representing caching lists from several sources, C2 representing caching of network connection information from several nodes and C3 representing caching user information from whole network.

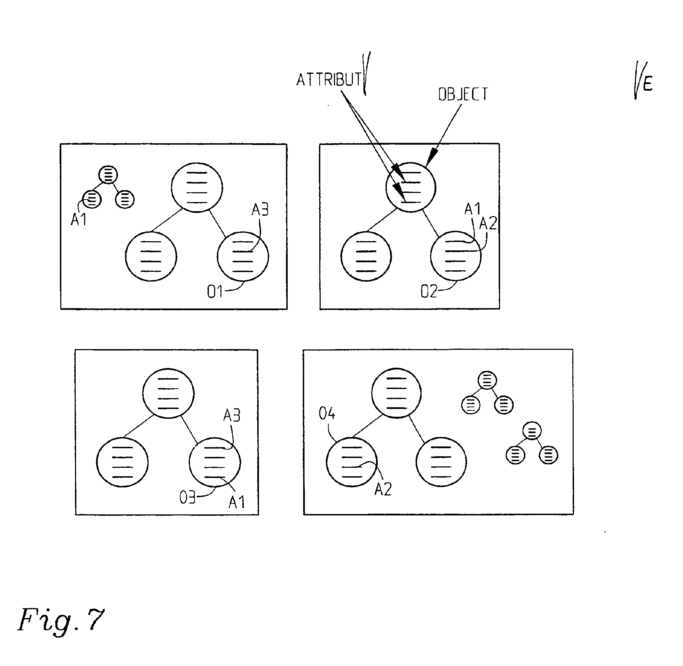

The problem encountered is mainly the one of knowing when to refresh the cache due to operations made in a distributed way. This is further described in accordance with figure 7. There are two objects O1 and O2 with attributes A1, A2 and A3 in two applications on one management level. In two applications on a sublevel there are two objects O3 and O4 that also contain the same attributes. This will mean that the values of the attributes on the higher level need to be cached. An operation on A1 in the first higher level application is directly changing A1 in O3 in the lower level application but how should the second higher level application be aware of the change of O2. The same applies also if object O3 has a feature that makes an operation on A3 also indirectly changing A1.

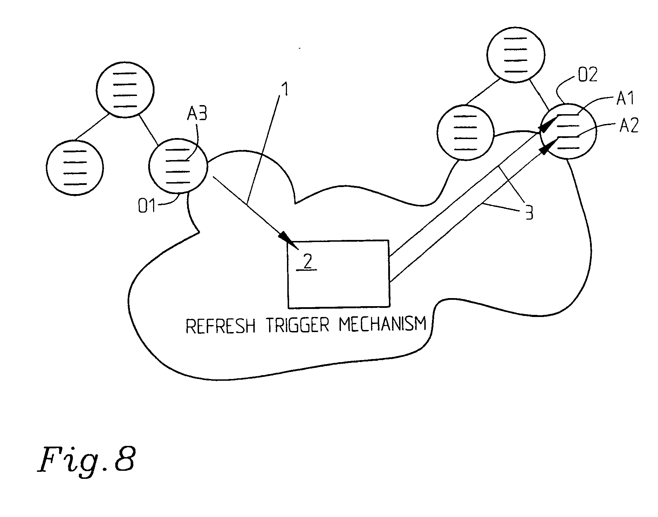

The solution according to the invention for this problem is a refresh trigger mechanism based on context, cf. Fig 8.

An example of how to structure a refresh trigger mechanism is described in figure 8. In object O1 attribute A3 is modified and then a modification trigger 1 starts a context association procedure. This procedure can be a simple hardcoded table of attribute values and corresponding objects but may also be a sophisticated standalone program with database tables and communication with CORBA catalogue services etc. The DNS (Domain Name System) is a hierarchical structure that is a very suitable source for context associations 2. The procedure makes a refresh triggering call 3 to the objects it has found to be affected. Thereby a very generic mechanism can be used to keep all objects updated.

It should be clear that the invention is of course not limited to the particularly illustrated embodiments but that it can be varied in a number of ways within the scope of the appended claims.

## Claims

1. A system for providing distributed caching of reply data objects (17) within a packet data network comprising network elements (14), a client terminal (10) and at least two intermediary Web caches (12),
**characterized in**
**that** each of said of at least two intermediary Web caches (12) is provided with information handling means for defining both object operation type and object context, that each of said at least two intemediary Web caches is adapted to handle data in a request, said data being separated into object
context defining data and pure information data, to define associations between request objects (16) and reply objects based on the object contexts and to use the defined associations to discriminate between relevant and irrelevant reply data, that caching is server based, and in that it comprises a cache refresh trigger mechanism based on object context according to which a modification trigger is adapted to start an object context association procedure when an attribute of an object is modified making a refresh triggering call to affected objects as given by the defined association to keep all said affected objects updated.

2. A communication system according to claim 1, **characterized in**
**that** the associations between object context in requests and replies are used for discriminating between relevant and no longer relevant reply data.

3. A communication system according to claim 1 or 2, **characterized in**
**that** the object context defining data contains information data.

4. A communication system according to any one of claims 1-3, **characterized in**
**that** caching is separated with reference to requesting and replying.

5. A communication system according to any one of claims 1-4, **characterized in**
**that** the definition of the associations may be changed.

6. A communication system according to any one of claims 1-5, **characterized in**
**that** need for refreshing a cache is determined by means of caching algorithms using information as to operation type.

7. A communication system according to claim 6, **characterized in**
**that** the operation types include CREATE, DELETE and LIST.

8. A communication system according to claim 7, **characterized in**
**that** the operation type information is packaged for easy access.

9. A communication system according to any one of claims 1-8, **characterized in**
**that** it is adapted to implement a gradual pre-fetch of cache data.

10. A communication system according to claim 9, **characterized in**
**that** said pre-fetching of cache data is based on read operations for data within a same object context.

11. A communication system according to claim 9 or 10, **characterized in**
**that** said pre-fetching of data is performed at start-up.

12. A communication system according to any one of claims 9-11, **characterized in**
**that** a part or parts of a cache is/are updated by an operator by manually choosing a new object context.

13. A method of providing distributed caching of reply data objects (17) within a packet data network (10, 11, 13, 14), comprising network elements, a client terminal and at least two intermediary web caches (12),
**characterized in**
**that** each of the at least two intemediary web caches (12) is provided with information handling means, and in that the method comprises the steps of, in each of the at least two intermediary web caches (12) :
- defining object operation types and object contexts;
- handling data in a request separated into object context
- defining data and pure information data; and reply
- defining associations between request objects (16) and reply objects (17) based on object context in a reply data object (17) caching process;
- using the defined associations to discriminate between relevant and irrelevant reply data;
- implementing server based caching, and
- implementing a cache refresh trigger mechanism based on object context consisting of a modification trigger starting a context association procedure when an attribute of an object is modified making a refresh triggering call to affected objects as given by the defined association to keep all said affected objects updated.

14. A method according to claim 13,
**characterized in**
**that** the discrimination is done between relevant and no longer relevant reply data.

15. A method according to any one of claims 13 or 14, **characterized in**
**that** it comprises the steps of:
- separating caching functionality with reference to requesting and replying.

16. A method according to any one of claims 13-15, **characterized in**
**that** it comprises the steps of:
- gradually pre-fetching cache data, and
- basing said pre-fetching of cache data on read operations for data within a same context.

17. A method according to any one of claims 13-16, **characterized in**
the it comprises the step of:
- using Man Machine Language for communication towards Network Elements.

## Patentansprüche

1. System zum Bereitstellen von verteiltem Cachen von Antwortdatenobjekten (17) innerhalb eines Paketdatennetzwerks, welches Netzwerkelemente (14), ein Client-Endgerät (10) und wenigstens zwei Zwischen-Web-Caches (12) umfasst,
**dadurch gekennzeichnet,**
**dass** jeder von den wenigstens zwei Zwischen-Web-Caches (12) mit Informationsverarbeitungsmitteln bereitgestellt wird, um einen Objektoperationstyp und einen Objektkontext zu definieren, dass jeder von den wenigstens zwei Zwischen-Web-Caches angepasst ist, Daten in einer Anfrage zu verarbeiten, wobei die Daten getrennt sind in Objektkontext-definierende Daten und reine Informationsdaten, um Verknüpfungen zwischen Anfrageobjekte (16) und Antwortobjekten zu definieren, basierend auf den Objektkontexten, und um die definierten Verknüpfungen zu nutzen, um zwischen relevanten und irrelevanten Antwortdaten zu unterscheiden, dass Cachen Server-basiert ist, und **dadurch**, dass es einen Cache-Aktualisierungsauslösermechanismus umfasst, basierend auf einem Objektkontext gemäß welchem ein Modifikationsauslöser angepasst ist, eine Objektkontext-Verknüpfungsprozedur zu starten, wenn ein Attribut eines Objekts modifiziert wird, wobei ein Aktualisierungs-auslösender Aufruf an betroffene Objekte gemacht wird, wie gegeben durch die definierte Verknüpfung, um alle die betroffenen Objekte upgedated zu halten.

2. Kommunikationssystem nach Anspruch 1, **dadurch gekennzeichnet, dass** die Verknüpfungen zwischen Objektkontext in Anfragen und Antworten genutzt werden, um zwischen relevanten und nicht länger relevanten Antwortdaten zu unterscheiden.

3. Kommunikationssystem nach Anspruch 1 oder 2, **dadurch gekennzeichnet, dass** die Objektkontext-definierenden Daten Informationsdaten beinhalten.

4. Kommunikationssystem nach einem der Ansprüche 1 bis 3, **dadurch gekennzeichnet, dass** Cachen getrennt ist in Bezug auf Anfragen und Antworten.

5. Kommunikationssystem nach einem der Ansprüche 1 bis 4, **dadurch gekennzeichnet, dass** die Definition der Verknüpfungen geändert werden kann.

6. Kommunikationssystem nach einem der Ansprüche 1 bis 5, **dadurch gekennzeichnet, dass** die Notwendigkeit, einen Cache zu aktualisieren, mittels Caching-Algorithmen bestimmt wird unter Nutzung von Information bezüglich eines Operationstyps.

7. Kommunikationssystem nach Anspruch 6, **dadurch gekennzeichnet, dass** die Operationstypen CREATE, DELETE und LIST beinhalten.

8. Kommunikationssystem nach Anspruche 7, **dadurch gekennzeichnet, dass** die Operationstypeninformation für einen einfachen Zugriff gebündelt ist.

9. Kommunikationssystem nach einem der Ansprüche 1 bis 8, **dadurch gekennzeichnet, dass** es angepasst ist, einen graduellen Vorababruf von Cache-Daten zu implementieren.

10. Kommunikationssystem nach Anspruch 9, **dadurch gekennzeichnet, dass** der Vorababruf von Cache-Daten auf Leseoperationen für Daten innerhalb eines selben Objektskontextes basiert.

11. Kommunikationssystem nach Anspruch 9 oder 10, **dadurch gekennzeichnet, dass** der Vorababruf von Daten beim Starten durchgeführt wird.

12. Kommunikationssystem nach einem der Ansprüche 9 bis 11, **dadurch gekennzeichnet, dass** ein Teil oder Teile eines Caches durch einen Operator aktualisiert wird/werden durch manuelles Wählen eines neuen Objektkontextes.

13. Verfahren zum Bereitstellen von verteiltem Cachen von Antwortdatenobjekten (17) innerhalb eines Paketdatennetzwerks (10, 11, 13, 14), welches Netzwerkelemente, ein Client-Endgerät und wenigstens zwei Zwischen-Web-Caches (12) umfasst,
**dadurch gekennzeichnet,**
**dass** jeder der wenigstens zwei Zwischen-Web-Caches (12) mit Informationsverarbeitungsmitteln bereitgestellt wird, und **dadurch**, dass das Verfahren die Schritte umfasst, in jedem der wenigstens zwei Zwischen-Web-Caches (12):
- Definieren von Objektoperationstypen und Objektkontexten;
- Verarbeiten von Daten in einer Anfrage, getrennt in Objektkontext-definierende Daten und reine Informationsdaten;
- Definieren von Verknüpfungen zwischen Anfrageobjekten (16) und Antwortobjekten (17), basierend auf einem Objektkontext in einem Antwortdatenobjekt- (17) Caching-Prozess;
- Nutzen der definierten Verknüpfungen, um zwischen relevanten und irrelevanten Antwortdaten zu unterscheiden;
- Implementieren von Server-basiertem Cachen, und
- Implementieren eines Cache-Aktualisier-Auslösermechanismus basierend auf einem Objektkontext, bestehend aus einem Modifikationsauslöser, welcher eine Kontext-Verknüpfungsprozedur startet, wenn ein Attribut eines Objekts modifiziert wird, wobei ein
Aktualisierauslöseraufruf an betroffene Objekte gemacht wird, wie durch die definierte Verknüpfung gegeben, um alle die betroffenen Objekte upgedated zu halten.

14. Verfahren nach Anspruch 13, **dadurch gekennzeichnet, dass** die Unterscheidung zwischen relevanten und nicht länger relevanten Antwortdaten erfolgt.

15. Verfahren nach einem der Ansprüche 13 oder 14, **dadurch gekennzeichnet, dass** es die Schritte umfasst:
- Trennen von Caching-Funktionalität in Bezug auf Anfragen und Antworten.

16. Verfahren nach einem der Ansprüche 13 bis 15, **dadurch gekennzeichnet, dass** es die Schritte umfasst:
- graduelles Vorababrufen von Cache-Daten, und
- Basieren des Vorababrufens von Cache-Daten auf Leseoperationen für Daten innerhalb eines selben Kontextes.

17. Verfahren nach einem der Ansprüche 13 bis 16, **dadurch gekennzeichnet, dass** es den Schritt umfasst:
- Nutzen von Mensch-Maschinen-Sprache zur Kommunikation gegenüber Netzwerkelementen.

## Revendications

1. Système destiné à fournir une mise en antémémoire distribuée d'objets de données de réponse (17), au sein d'un réseau de données en paquets comprenant des éléments de réseau (14), un terminal client (10) et au moins deux antémémoires web intermédiaires (12),
**caractérisé**
**en ce que** chacune desdites au moins deux antémémoires web intermédiaires (12) est dotée d'un moyen de gestion des informations destiné à définir à la fois un type d'opération d'objet et un contexte d'objet, en ce que chacune desdites au moins deux antémémoires web intermédiaires (12) est conçue pour gérer des données dans une demande, lesdites données étant séparées en données définissant un contexte d'objet et en données pures d'information, pour définir des associations entre des objets de demande (16) et des objets de réponse sur la base des contextes d'objet et pour utiliser les associations définies afin de distinguer entre les données de réponse pertinentes et non pertinentes, en ce que l'antémémoire est installée sur un serveur et en ce qu'elle comprend un mécanisme de déclenchement du rafraîchissement de l'antémémoire basé sur le contexte d'objet, dans lequel un déclencheur de modification est conçu pour lancer une procédure d'association de contexte d'objet lorsqu'un attribut d'un objet est modifié, en réalisant des appels de déclenchement de rafraîchissement vers des objets affectés comme l'indique l'association définie, afin de maintenir à jour tous lesdits objets affectés.

2. Système de communication selon la revendication 1, **caractérisé en ce que** les associations entre le contexte d'objet dans les demandes et les réponses sont utilisées pour distinguer entre les données de réponse qui sont pertinentes et celles qui ne le sont plus.

3. Système de communication selon la revendication 1 ou 2, **caractérisé en ce que** les données définissant le contexte d'objet contiennent des données d'information.

4. Système de communication selon l'une quelconque des revendications 1 à 3, **caractérisé en ce que** la mise en antémémoire distingue entre les demandes et les réponses.

5. Système de communication selon l'une quelconque des revendications 1 à 4, **caractérisé en ce que** la définition des associations peut être changée.

6. Système de communication selon l'une quelconque des revendications 1 à 5, **caractérisé en ce que** la nécessité de rafraîchir une antémémoire est déterminée à l'aide d'algorithmes de mise en antémémoire qui utilisent des informations sur le type d'opération.

7. Système de communication selon la revendication 6, **caractérisé en ce que** les types d'opération comprennent CRÉER, SUPPRIMER et LISTER.

8. Système de communication selon la revendication 7, **caractérisé en ce que** les informations de type d'opération sont conditionnées pour faciliter l'accès.

9. Système de communication selon l'une quelconque des revendications 1 à 8, **caractérisé en ce qu'**il est conçu pour réaliser une pré-lecture graduelle de données de l'antémémoire.

10. Système de communication selon la revendication 9, **caractérisé en ce que** ladite pré-lecture de données de l'antémémoire est fondée sur des opérations de lecture de données dans un contexte d'objet identique.

11. Système de communication selon la revendication 9 ou 10, **caractérisé en ce que** ladite pré-lecture de données est effectuée au démarrage.

12. Système de communication selon l'une quelconque des revendications 9 à 11, **caractérisé en ce qu'**une ou plusieurs parties d'une antémémoire sont mises à jour par un opérateur en choisissant manuellement un nouveau contexte d'objet.

13. Procédé destiné à fournir une mise en antémémoire distribuée d'objets de données de réponse (17), au sein d'un réseau de données en paquets (10, 11, 13, 14) comprenant des éléments de réseau, un terminal client et au moins deux antémémoires web intermédiaires (12),
**caractérisé**
**en ce que** chacune desdites au moins deux antémémoires web intermédiaires (12) est dotée d'un moyen de gestion des informations et en ce que le procédé comprend, dans chacune desdites au moins deux antémémoires web intermédiaires, les étapes consistant à :
- définir des types d'opération d'objet et des contextes d'objet ;
- gérer des données dans une demande, séparées en données définissant un contexte d'objet et en données pures d'information ;
- définir des associations entre des objets de demande (16) et des objets de réponse (17) sur la base des contextes d'objet, dans un processus de mise en antémémoire des objets de données de réponse (17) ;
- utiliser les associations définies afin de distinguer entre les données de réponse pertinentes et non pertinentes ;
- mettre en oeuvre l'antémémoire sur un serveur ; et
- mettre en oeuvre un mécanisme de déclenchement du rafraîchissement de l'antémémoire basé sur le contexte d'objet, dans lequel un déclencheur de modification lance une procédure d'association de contexte d'objet lorsqu'un attribut d'un objet est modifié, en réalisant des appels de déclenchement de rafraîchissement vers des objets affectés comme l'indique l'association définie, afin de maintenir à jour tous lesdits objets affectés.

14. Procédé selon la revendication 13, **caractérisé en ce que** la distinction s'effectue entre les données de réponse qui sont pertinentes et celles qui ne le sont plus.

15. Procédé selon la revendication 13 ou 14, **caractérisé en ce qu'**il comprend l'étape consistant à :
- séparer la fonctionnalité de mise en antémémoire entre les demandes et les réponses.

16. Procédé selon l'une quelconque des revendications 13 à 15, **caractérisé en ce qu'**il comprend les étapes consistant à :
- effectuer une pré-lecture graduelle de données de l'antémémoire ; et
- baser ladite pré-lecture de données de l'antémémoire sur des opérations de lecture de données dans un contexte identique.

17. Procédé selon l'une quelconque des revendications 13 à 16, **caractérisé en ce qu'**il comprend l'étape consistant à :
- utiliser le langage homme-machine pour la communication en destination des éléments de réseau.
